Europäisches Patentamt

European Patent Office

Office européen des brevets

(19)

(11) **EP 1 360 538 B1**

(12) **EUROPEAN PATENT SPECIFICATION**

(45) Date of publication and mention
of the grant of the patent:
**10.11.2004 Bulletin 2004/46**

(51) Int Cl.⁷: **G02B 21/00**, G01B 11/30,
G01N 21/59

(21) Application number: **02711015.4**

(22) Date of filing: **06.02.2002**

(86) International application number:
**PCT/GB2002/000512**

(87) International publication number:
**WO 2002/063368 (15.08.2002 Gazette 2002/33)**

(54) **SCANNING NEAR-FIELD OPTICAL MICROSCOPE**

NAHFELDRASTERMIKROSKOP

MICROSCOPE OPTIQUE DE CHAMP PROCHE A BALAYAGE

(84) Designated Contracting States:
**AT BE CH CY DE DK ES FI FR GB GR IE IT LI LU
MC NL PT SE TR**

(30) Priority: **06.02.2001 GB 0102953
17.10.2001 GB 0124948**

(43) Date of publication of application:
**12.11.2003 Bulletin 2003/46**

(73) Proprietor: **The University of Bristol
Clifton, Bristol BS8 1TH (GB)**

(72) Inventors:
• **MILES, Mervyn, John
Bristol, Avon BS11 0UR (GB)**
• **HUMPHRIS, Andrew, David, Laver
Bath, BA1 2RU (GB)**
• **HOBBS, Jamie, Kayne
Bristol, Avon BS4 3DB (GB)**

(74) Representative: **Williams, Ceili
Stevens Hewlett & Perkins
Halton House
20/23 Holborn
London EC1N 2JD (GB)**

(56) References cited:
EP-A- 0 545 538      EP-A- 0 864 899
DE-A- 19 531 466     DE-A- 19 852 833
US-A- 6 008 489

• SIMPSON S H ET AL: "Analysis of the effects arising from the near-field optical microscopy of homogeneous dielectric slabs" OPTICS COMMUNICATIONS, NORTH-HOLLAND PUBLISHING CO. AMSTERDAM, NL, vol. 196, no. 1-6, 1 September 2001 (2001-09-01), pages 17-31, XP004300726 ISSN: 0030-4018 cited in the application

• KHALED KARRAI ET AL: "PIEZOELECTRIC TIP-SAMPLE DISTANCE CONTROL FOR NEAR FIELD OPTICAL MICRISCOPES" APPLIED PHYSICS LETTERS, AMERICAN INSTITUTE OF PHYSICS. NEW YORK, US, vol. 66, no. 14, 3 April 1995 (1995-04-03), pages 1842-1844, XP000500961 ISSN: 0003-6951 cited in the application

• JORDAN C E ET AL: "REMOVING OPTICAL ARTIFACTS IN NEAR-FIELD SCANNING OPTICAL MICROSCOPY BY USING A THREE-DIMENSIONAL SCANNING MODE" JOURNAL OF APPLIED PHYSICS, AMERICAN INSTITUTE OF PHYSICS. NEW YORK, US, vol. 86, no. 5, 1 September 1999 (1999-09-01), pages 2785-2789, XP000934914 ISSN: 0021-8979 cited in the application

• ANTOGNOZZI M ET AL: "A NEW METHOD TO MEASURE THE OSCILLATION OF A CYLINDRICAL CANTILEVER: THE LASER REFLECTION DETECTION SYSTEM" REVIEW OF SCIENTIFIC INSTRUMENTS, AMERICAN INSTITUTE OF PHYSICS. NEW YORK, US, vol. 71, no. 4, April 2000 (2000-04), pages 1689-1694, XP001000972 ISSN: 0034-6748 cited in the application

- **SEKATSKII S K ET AL: "TIME-GATED SCANNING NEAR-FIELD OPTICAL MICROSCOPY" APPLIED PHYSICS LETTERS, AMERICAN INSTITUTE OF PHYSICS. NEW YORK, US, vol. 77, no. 14, 2 October 2000 (2000-10-02), pages 2089-2091, XP000964119 ISSN: 0003-6951 cited in the application**

## Description

This invention relates to the field of near-field microscopy, specifically to microscopes which form an image by detection of non-radiating electromagnetic fields.

For centuries spatial resolution by optical microscopy was believed to be fundamentally limited by diffraction. This limit followed from a classical model: gratings with a spacing of less than $\lambda/2$ (where $\lambda$ is the wavelength of the illuminating radiation) will, regardless of the angle of incidence, simply be incapable of scattering light towards a microscope objective. Thus any structural features within an object having a spatial variation smaller than $\lambda/2$, will be lost from an image formed by conventional microscopy.

With the development of scanning tunnelling microscopy (STM), resolution was achieved for the first time below the diffraction limit and the family of local probe based microscopes was born. The scanning near-field optical microscope (SNOM, sometimes referred to as NSOM) is a local probe device which detects photons, rather than the electrons of STM.

EP 0 545 538 A discloses a shear-force sensing probe for a SNOM, using a position-sensitive photodetector is observe changes in amplitude and phase of the oscillation induced in said probe by piezoelectric actuators.

Models developing the theory of SNOM operation are based on a distinction between radiating (or propagating) and non-radiating (or non-propagating or evanescent) electromagnetic fields. The radiating field is that which is detected by conventional optics (even as close as a distance of a few wavelengths from the sample); that is the field which propagates away from a sample, and which is incapable of communicating sub-wavelength information. The evanescent field is localised at a sample surface and its existence can be deduced from a consideration of the boundary conditions at the interface of a nanometric structure and an illuminating field. This non-radiating field is characterised by high spatial frequencies which reflect surface structure and which are unable to propagate away. In the near-field zone (which term is used herein to refer to the region within which the evanescent field exists around an illuminated sample) both propagating and non-propagating components exist. These are not separable and a perturbation of one will lead to a modification of the other. It was shown by E. Wolf and M. Nieto-Vesperinas in "Analycity of the angular spectrum amplitude of scattered fields and some of its consequences", J. Opt. Soc. Am. Vol. **2**, pages 886 - 889 (1985) that a light beam impinging on a limited object (where limited in this sense means that the material structure presents a sharp discontinuity) will always be converted into a propagating and an evanescent field. The incident field can be either propagating or evanescent.

The object behind all local probe-based microscopes is to detect an evanescent field formed about a sample via the interaction between the field and a probe (hence local probe). There are a variety of ways in which this has been realised. A review of this field is presented in the paper "Image Formation in Near-Field Optics" by Jean-Jacques Greffet and Rémi Carminati in Progress in Surface Science, Vol. **56** (3), pages 133 - 237 (1997). Examples of local probe SNOM techniques include apertured and apertureless methods, which are each subdivided into collection and illumination modes. Regardless of data collection technique, a full image of the sample surface is formed by scanning the probe and taking successive data readings.

Upon its development SNOM found many applications. In addition to its obvious relevance to imaging surfaces at a nanometer scale, SNOM has also proven useful in the detection and measurement of confined electromagnetic fields, such as surface plasmon polaritons, guided waves and microcavity resonant modes; for local spectroscopy of surfaces; for the modification of surface properties, e.g. nanowriting or modification of magneto-optic domains. This latter application offers great potential for significant advances in high-density data storage.

In apertured SNOM, the most commonly used technique, an aperture with dimensions of tens of nanometers is held within a few nanometers of the surface to be studied. This aperture is usually the end of a sharpened optical fibre, the side surfaces of which are coated in aluminium (to form an opaque "screen" with central aperture). In illumination mode a laser is shone down the optical fibre. As the aperture is sub-wavelength an electromagnetic field cannot propagate and an evanescent field, which decays rapidly with distance, is formed about the probe tip. The evanescent field is scattered and diffracted by the surface under study and this field perturbation is coupled into the propagating field. The propagating waves are then detected in the far field. in collection mode the sample is illuminated in a standard manner, for example by an optical microscope objective, and the apertured probe is again brought to within the near-field range of the surface. In this implementation the probe interacts directly with the evanescent and propagating fields present in the near-field zone. The evanescent field itself cannot propagate along the probe, but its interaction with the probe results in the generation of a propagating component which is re-emitted into, for example, an optical fibre light guide.

In apertureless SNOM neither detection nor illumination are in the near field. Both are in the far field and the probe is a small scattering tip which is brought into the near field. The probe interacts with the evanescent field generated about the illuminated sample and the results of this interaction are seen in propagating waves collected in the far field. By scanning the probe close to the sample surface therefore, variations in the near field are transferred to the far field. Vertical dithering of the probe and lock-in detection are used in practical instrumentation in order to discriminate signal from background.

Regardless of the detail of the implementation, a key practicality of all local probe microscopes is to find some way of controlling the tip - surface separation in order to ensure that the probe is held within the decay length of the evanescent field. Since the early 1990s this has commonly been achieved by use of the "shear force" method. This technique involves oscillating horizontally, with respect to the sample surface plane, a vertically-mounted probe, at a frequency close to its resonant frequency. Such an oscillation may be effected by a piezoelectric element vibrating the tip laterally over a few nanometers. As the surface is approached surface - probe interactions lead to a damping of the oscillation amplitude. The damping mechanism, under ambient conditions, is generally thought to be due to a confined water layer on the sample surface, but other damping interactions are also feasible. Oscillation amplitude can then be measured, for example, by photovoltaic measurement of an oscillating shadow of the tip in a secondary light beam. By monitoring this amplitude it is possible to maintain it at a constant value and therefore to maintain constant distance between the tip and the sample surface.

An alternative to using the shear force to monitor sample to probe distance, the photon current (by analogy with the electron current in STM) may also be used. In STM, by adjusting height so as to maintain a constant electron current, the probe can be kept a set distance away from the sample surface. Monitoring the photon current however is far less straightforward. Both evanescent and radiating fields are present in the near field and the detected photon current is not only dependent on the topography of the sample, but also on its material nature and the distance of analysis. Despite this, photon current can be used effectively in certain specialised circumstances. One such example is when the sample is illuminated by total internal reflection of an incident beam, and probed in transmission. In this arrangement illumination is by evanescent field only and so there will be minimal propagating wave on the probe side of the sample. This increases the photon current dependence on topography, and makes monitoring the photon current to maintain separation viable. This mode of SNOM is often referred to as photon scanning tunnelling microscopy (PSTM).

A disadvantage of all such local probe techniques is data collection time: a full image scan taken with the necessarily small probe is time consuming. Typically, the time taken to collect an image is in the region of several tens of seconds, which precludes real-time monitoring of many scientifically, industrially and physiologically important processes. Furthermore, as local probe techniques are increasingly being used to read and write data beyond the $\lambda/2$ limitation of conventional optical storage media, it is rapidly becoming apparent that the speed of data processing is limited by the.speed with which information can be read. There is therefore a perceived need to improve data collection times in near-field scanning techniques.

It is an object of this invention to provide a system capable of more rapid collection of near-field interactions and thereby to increase information readout rates and to open up more scientific, industrial and physiological processes to real-time SNOM investigation.

Accordingly this invention provides a scanning near-field optical microscope comprising a probe which is moveable into a near-field region surrounding a surface of an illuminated sample; driving means arranged to provide relative motion between the probe and the sample surface; means for oscillating the probe across the sample surface; and a detector arranged to detect electromagnetic radiation affected by an interaction between probe, field and sample in the near-field region; characterised in that, the microscope is arranged, in operation, to carry out a scan of the sample surface wherein scan area is covered by an arrangement of scan lines, each scan line being collected by oscillating the probe at or near its resonant frequency such that oscillation amplitude determines scan line length and their arrangement is provided by operation of the driving means.

In near- or at- resonant oscillation the probe will move very rapidly over the sample surface. Each scan line is collected as a continuous (analogue) image as the probe oscillates across the surface of the sample. By simultaneously providing relative motion between the probe and sample surface, successive scan lines will collect information from different parts of the surface. After covering an area of the surface, scan line information can be collected and reconstituted with appropriate displacements to form an image of the two-dimensional scan area.

Various orientations of probe oscillation and probe / surface relative motion may be used to cover the scan area. A linear translation may be applied in a direction which is substantially orthogonal to a plane in which the probe is oscillated, thereby defining a substantially rectangular scan area. If the relative motion is continuous, the scan area is rapidly covered by a single, continuous, zigzagging line. Alternatively, a circular arrangement may be generated by providing a relative rotation of probe and sample about an axis substantially coincident with that about which the probe is oscillated. Moreover, oscillation may also follow a figure of eight path, again with a rotational relative motion.

It is very much preferred that the relative motion between probe and sample surface is provided at an adjustable separation distance, this distance during the scan being controlled by height-adjustment means arranged to monitor a parameter characteristic of probe - surface distance and to adjust either probe or sample height in order to maintain a substantially constant value of that parameter.

As previously mentioned, in order to take a meaningful local probe measurement, the probe itself must be kept within a few nm of the sample surface. Under even the best practically achievable conditions, instabilities in the equipment and environment make it very difficult to control the height of the probe to this extreme degree of consistency without incorporating some degree of independent adjustability. Accordingly, the preferred local probe microscope will scan the probe at an adjustable height above the sample surface.

Preferably the driving means is also arranged to provide the physical height adjustment, either by driving the probe or the sample.

The distance between the probe and surface may be controlled by feedback from the value of the monitored parameter. Advantageously, this monitored parameter which is characteristic of probe - surface distance is oscillation amplitude, and data relating to this parameter is gathered contemporaneously with scan line image collection. This measurement is the basis for the so-called shear force method of estimating probe - surface distance. As is well known and frequently exploited in this field, probe oscillations will become more damped as the surface is approached and the strength of the shear force between the moving probe and surface is increased. This means that a measure of probe height may be obtained by monitoring oscillation amplitude.

In prior art systems relying on shear force the image-gathering scan is stepped in two dimensions and at each stopping point the probe is oscillated to provide data for the height adjustment. Although this does enable probe height to be maintained and so improve image resolution there are a number of disadvantages. First, the scan must be stepped in two dimensions. This inevitably increases the complexity of equipment needed to carry out the scan and the number of pauses between steps naturally adds to the time required to complete the scan. Secondly, if scan speed is important in the prior art arrangement, then amplitude information may be gathered at the same time as image collection. However, the oscillations of the probe over each pixel will inevitably lead to a slight loss of resolution. For this reason oscillation amplitudes are kept as small as possible, typically ~ few nm.

By way of contrast, by making a two-fold use of the oscillation of the probe the arrangement of the apparatus is considerably simplified. Probe oscillation is used in this embodiment of the invention to provide both an entire scan line and a height indication. There is therefore no need to provide driving equipment capable of providing stepped motion in multiple dimensions in order to cover a scan area. Moreover, by extending the amplitude of oscillation, the signal is read continuously along each scan line: there is no loss in resolution due to either digitisation or probe oscillation. Inevitably, there is the loss of the ability to integrate signals obtained at discrete scan points which will lead to some loss of accuracy. This is not to say that integration cannot be performed with the apparatus of this invention, it can of course be achieved but at the expense of speed. For example multiple probe oscillations may be carried out while collecting information on what is effectively the same scan line. For many applications it has been found that the slight overall loss in resolution is more than compensated by the gain in the speed at which an image can be collected.

The means for oscillating the probe across the sample surface is preferably arranged, during scan line collection, to oscillate the probe just off its resonant frequency. Although oscillation at resonance would maximise the length of a scan line, oscillation near resonance provides the advantage of increased sensitivity when relying on the shear force to provide an indication of probe - surface separation. The shear force method requires oscillation amplitude to be measured and there is a greater response, by way of amplitude change, to a shift in position of the resonance peak when operating just off resonance.

The microscope may also include a laser source, split photodetector and split detector signal processing means arranged such that light from the laser is incident on and reflected from the probe, when oscillating, towards the split detector. The processing means is then arranged to generate a value for probe oscillation amplitude based on a ratio of signals received at different parts of the split detector.

This provides an advantageous means by which the probe oscillation amplitudes can be measured. Other methods exist but those relying on interferometry, although being very accurate, have more critical requirements in beam alignment and also tend to be prone to mechanical drift. This embodiment of the invention therefore provides a relatively simple apparatus with which to take the necessary amplitude measurements, with acceptable accuracy. It also provides an absolute measurement of probe displacement, which in turn defines the scan size.

Alternatively the probe may be attached to a prong of a tuning fork and probe oscillation amplitude measured by means of a piezoresistive coating on the prongs. This technique, as described by K.Karrai & R. D.Grober in "Piezoelectric tip-sample distance control for near field optical microscopes", Appl. Phys. Lett. **66** (14), 1842 -1844 (1995), has the advantage that it is somewhat simpler to set up than the alternatives.

Optionally, if the electromagnetic field is substantially an evanescent field then the parameter characteristic of probe - surface distance may be photon current. Preferably this arrangement is applied using a photon scanning tunnelling microscope. In theory, it will also be applicable to apertured illumination methods but, to date, there has been no practical implementation of height control by monitoring the photon current generated in apertured illumination. In this embodiment of the invention the probe oscillation is used only for traversing a scan line, and the signal intensity is integrated over one oscillation cycle. This provides an alternative means of maintaining probe height which does not require the additional equipment used to measure oscillation amplitude. As photon current is actually already measured in collecting an image, the only additional requirement will be further data processing. Unfortunately this technique is of only limited application.

In another aspect this invention provides a digital data readout system comprising a microscope as hereinabove described adapted to scan a data storage medium onto which data is written as a change in optical properties of the storage medium. Data may be written as burnt nanometric pits.

In a third aspect this invention provides a local probe for use in near-field microscopy arranged such that the probe is scannable over a scan area characterised in that, in covering the scan area, the probe is oscillated across a surface of a sample at or near its resonant frequency, thereby defining a series of scan lines whose length is determined by oscillation amplitude, whilst in relative motion with the surface.

In a further aspect this invention provides a method of rapidly collecting image data from a scan area of a sample with nanometric features wherein the method comprises the steps of:-

(a) illuminating the sample with an electromagnetic field;

(b) moving a probe with tip of sub-wavelength dimensions into a near-field region in the proximity of the sample;

(c) oscillating the probe across a surface of the sample at or near its resonant frequency whilst providing a relative motion between the probe and surface such that an arrangement of scan lines, whose length corresponds to oscillation amplitude, covers the scan area;

(d) detecting radiation which is coupled into the near-field region, and which therefore contains information relating to interactions between the probe, field and sample, at a detector; and

(e) processing signals from the detector in order to extract information relating to the nanometric structure of the sample.

Embodiments of the invention will now be described by way of example only and with reference to the accompanying drawings.

Figure 1 shows a schematic implementation of the invention in a photon scanning tunnelling microscope (PSTM mode).

Figure 2a shows an image of the surface of a spherulite of PHB/V taken using a prior art shear-force SNOM.

Figure 2b shows an image, corresponding to a portion of the image illustrated in Figure 2a, taken using the apparatus of Figure 1.

Figure 3 shows a schematic implementation of the invention in an apertureless scanning near-field optical microscope (apertureless SNOM mode)

Figure 4 is a schematic illustration of the invention implemented in an apertured illumination SNOM mode.

Figure 5 is a schematic illustration of an implementation of the invention in a first apertured collection SNOM mode.

Figure 6 is a schematic illustration of an implementation of the invention in a second apertured collection SNOM mode.

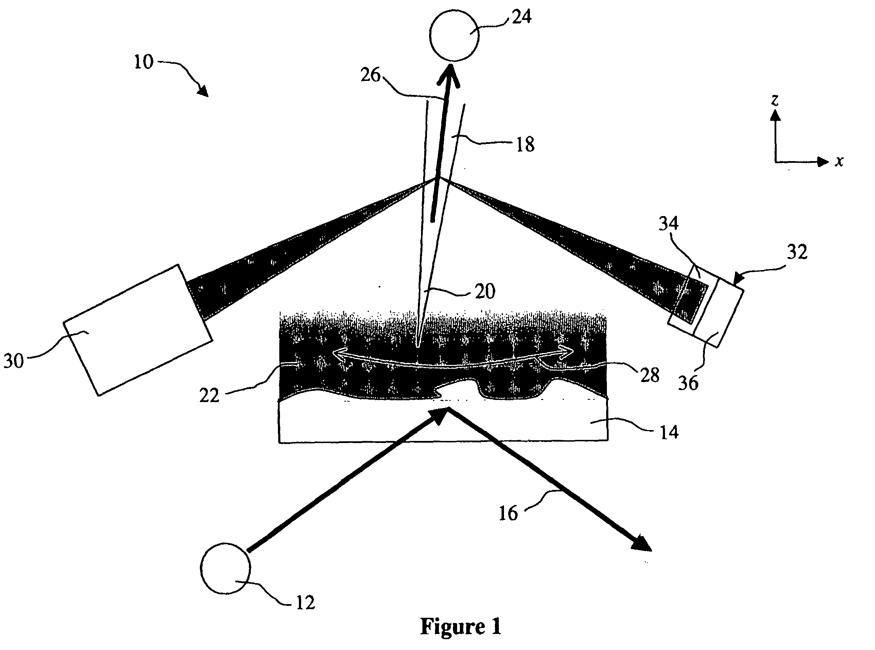

Figure 1 illustrates a PSTM mode implementation of the invention, indicated generally by 10. Light from a first laser source 12 is focused onto a Dove prism (not shown) supporting a sample 14. At the prism - sample interface the light undergoes total internal reflection, reflecting propagating waves 16 and illuminating the sample 14 in an evanescent field. A tapered optical fibre 18 with probe tip 20 is mounted substantially normally to the sample surface and is moveable into the near-field region 22. A photodiode detector 24 is arranged to collect an optical signal 26 propagating along the fibre 18. A piezoelectric transducer (not shown) is connected to the fibre 18 in order to drive a near-resonance oscillation of the probe tip 20 in a lateral direction, as indicated by arrows 28. The prism supporting the sample 14 is mounted on a scan tube (not shown) which controls its motion in a plane perpendicular to the oscillation plane, containing the oscillation axis. Probe oscillation is monitored by reflection by the fibre 18 of a focused light beam from a second laser 30 towards an off-axis split photodiode detector 32. The split detector 32 comprises first 34 and second 36 photodetector components.

The tapered fibre 18 can be produced by a number of conventional means, for example using a Sutter carbon dioxide laser fibre puller. The lasers 12, 30 can be any of a number of types, depending on the application. In initial experiments the first laser 12 was a 20 mW He-Ne laser and the second 30 was a diode laser of around 1 mW power. For spectroscopic analysis the first laser 12 should be polychromatic, or a variety of different wavelength lasers are required.

In order to appreciate the operation of this invention it is helpful to define, for the purposes of this description only, $x, y$ and $z$ orthogonal axes of the system. The $y$ direction is that into the page of Figure 1, $z$ corresponds to the vertical direction and $x$ the horizontal direction in the plane of the Figure. The sample thus occupies substantially the $xy$ plane, oscillation of the fibre results in tip movement substantially in the $x$ direction (with the oscillation axis running parallel to the $z$ axis) and the scan tube controls sample motion in the $y$ and $z$ directions.

With reference to Figure 1, the operation of the invention in the PSTM mode system 10 will now be described. The first laser 12, as described above, illuminates the sample 14 in an evanescent field. In order to scan nanometric features of the sample 14, the probe tip 20 is brought into this evanescent field and oscillated in the *xz* plane near resonance with a relatively large amplitude of up to a few microns. At the same time the scan tube moves the prism continuously in the y direction. In this way, due to relative motion of probe 20 and sample 14, the probe performs a zigzag raster scan of the sample surface. Scan area therefore corresponds to oscillation amplitude (width) by total scan tube displacement (length). The probe is oscillated near resonance in order to obtain near-maximum scan width for a given drive force. As a result of the sample - field - probe tip interaction, a radiating field 26 is produced which propagates along the fibre to the detector 24. The detector signal is extracted and processed to derive an image of the sample surface in accordance with techniques standard in the art.

The image extracted by this method is of the optical surface. That is, it is a convolution of the optical and topographic features of the near surface region. Processing can be carried out according to the information required. For example, in order to extract the optical information, the scan is repeated multiple times at different heights above the surface. The topographical contribution will be more pronounced for the lower layers and the variation over the layered images allows it to be removed. Optical information however is not ideally collected by the PSTM embodiment of this invention, as this SNOM implementation is far more sensitive to topography than other techniques.

A description of how to separate optical and topographical contributions to the PSTM image is found in an article by C.E. Jordan *et al,* "Removing optical artefacts in near-field scanning optical microscopy by using a three-dimensional scanning mode", J.Appl. Phys. **86**(3) p 2785 (1999).

In order to maintain the height of the probe 20 above the sample 14 the embodiment of the invention shown in Figure 1 makes use of the shear force method. That is, probe oscillations are monitored and adjustments made to ensure that their amplitude remains relatively constant throughout the scan. In this way a two-fold use is made of the probe oscillations: first, they contribute to execution by the probe 20 of a fast raster scan of the sample surface and secondly, they allow the crucial factor of probe height above the sample surface to be maintained.

Clearly therefore it is important to be able to measure the amplitude of probe oscillation. In order to do this, light from the second (~ 1 mW) laser 30 is focused to a focal point on a surface of the fibre 18. From here it is reflected at an angle of approximately 90° towards the split photodiode detector 32. As the fibre 18 oscillates the focal point is moved relative to the (curved) surface of the fibre. This changing curvature causes the angle of reflection to change and so the reflected beam moves across the split detector 32. The detector 32 is not symmetrically oriented with respect to the oscillation but detects only part, up to a half, of the swing. As the reflected beam traverses the detector 32, each photodetector component 34, 36 generates a signal, and the ratio of the two signal magnitudes is indicative of amplitude of the fibre oscillation. This response is calibrated by displacing the fibre 18 a known amount by applying a d.c. voltage to the piezoelectric transducer and observing the change in photodetector signal. This technique, of laser reflection detection, is described more fully by M.Antognozzi *et al.* in Rev. Sci. Instr. **71**(4), p 1689-1694 (2000).

When the probe 20 is brought into the near-field zone, the desired oscillation amplitude is set as a fraction of the free (far from the surface) oscillation amplitude of the probe 20. When this set amplitude is reached the scan is started. If at any point in the scan a reduced oscillation amplitude is observed, this indicates increased damping from which it is concluded that the probe - surface separation has been reduced. The sample 14 must therefore be moved away from the probe tip 20 (in the *z* direction). Conversely a larger amplitude oscillation indicates an increase in probe - surface separation and the sample 14 should be raised. A feedback technique is therefore used to maintain the set oscillation amplitude and so to ensure that the average probe - surface separation over a scan line is kept approximately constant. In reality, the amplitude will vary around the set amplitude. This variation has a number of contributory factors: overshoot in height adjustment, the fact that the time constant of the feedback loop has to be greater than the period of oscillation of the probe and the finite length of time it takes the probe to adjust to a change in interaction (settle time).

It is also important that the time constant for the feedback loop, which must be longer than the period of the probe oscillation, and the response time of the probe must be shorter than the time taken to complete the entire scan. Otherwise the probe would not have time to adjust if there is much change in probe-sample separation.

It is worth noting at this point that, sometimes, the term PSTM is taken to refer to a near-field microscopy technique in which the probe height above the sample is monitored via the photon current. Clearly, this interpretation is not appropriate in the present context as probe height in this embodiment of the invention is monitored via the shear force. The salient feature of PSTM, as the term is used herein, is that illumination is by an evanescent field, generated by total internal reflection.

This laser - probe - split photodiode system is by no means the only way in which probe oscillation amplitudes can be measured. Numerous other techniques may also be used with this invention. One method is to illuminate the oscillating fibre 18 and observe its shadow. As the shadow traverses a split photodetector, the ratio of signals from each component will again provide an indication of oscillation amplitude. Another method is to attach the fibre to one prong of a tuning fork. As the tuning fork is excited, the prongs will flex. The flexure is measured by a piezoresistive coating on the prongs. Commonly the inside and outside of the prongs are coated and the difference in generated voltage measured. Further alternatives may be based on differential interferometry. A disadvantage of differential interferometric methods however is that they require twin beams to impinge upon the probe and retrace their paths. This has proven very difficult to align. A second disadvantage is that this system does not provide an absolute measurement of probe displacement, that is it provides only an indication of whether oscillation amplitude has risen or fallen and, finally, it is particularly prone to mechanical drift.

The probe 20 is oscillated near to resonance, rather than at resonance which would maximise the length of a scan line, because there is a greater response, by way of amplitude change, to a shift in position of the resonance peak when just off resonance. Since this change in amplitude is what is measured in order to provide an indication of any variation in the probe - sample interaction, this positioning effectively improves the signal to noise ratio.

In order to maximise speed of the scan, each scan line is collected in a single oscillation of the probe. Clearly a better image could be obtained by multiple oscillations on each line although stepping and stopping the scan tube in order to provide for multiple traverses of the same line would lead to the probe ringing. This would also, clearly, reduce scan speed. The speed of the scan tube, however, can be set to move the sample at a speed as low as around 1 Å per oscillation cycle. With this speed it is possible therefore to perform something close to integration by adding consecutive lines together so that each line in the processed image becomes the average of, say, five oscillation lines. The increase in signal to noise ratio gained by this "integration" may, in many circumstances, more than compensate for the loss in resolution.

Although this embodiment of the invention includes a scan tube which provides a linear motion in the *y* direction, clearly many other scan geometries can be used. The only requirement, when imaging an area, is that the combination of sample (or, equivalently probe) translation and probe oscillation covers the area to be imaged. Thus, the sample could be rotated white the probe is oscillated thereby making up a scan comprising a circular series of scan lines passing through a central point. Alternatively, the probe could be set to oscillate in two perpendicular directions. If oscillations are then driven in both directions together a non-linear oscillation, such as a figure of eight, will result. If the axis of the figure of eight oscillation was then made to rotate, the probe movement would cover the scan area in a series of figures of eight passing through a central point.

Clearly if the scan is required to cover a sample area which is greater in the *x* direction than is covered by the oscillation amplitude of the probe, then a secondary scan in this direction may be introduced. After each step in the *x* direction an area of the sample is scanned, the individual scanned areas being arranged such that they cover the required sample area to be imaged.

In prior art systems relying on shear force to maintain the probe-sample distance, the scan is stepped in two dimensions and at each stopping point the probe is oscillated as it collects image data. The image collected at each point is therefore an average over the oscillation amplitude, leading to a loss in resolution. By way of contrast, the oscillations of the present invention permit an analogue line scan and so resolution is not limited by digitisation. One attempt to overcome the loss of resolution inherent in the step-and-oscillate prior art systems has been to collect optical data only on the part of the swing of a shear force probe when the probe is closest to the sample surface (S.K. Sekatskii *et al.* Appl. Phys. Lett. **77**(4), 2089 - 2091 (2000)). Nevertheless, this still remains an inherently time-consuming method of collecting a near-field image.

In this embodiment of the invention, the output signal from the photodiode 24 is fed through an amplifier (not shown) to a processing system (not shown) for data collection, processing and display. In order to enable digital data processing, the scan line may be pixellated artificially by the processing system.

In this PSTM mode of operation an alternative method of maintaining sample - probe distance is to monitor the photocurrent. In this embodiment, the total optical intensity is integrated over a cycle of probe oscillation, and probe height adjusted, via feedback, so as to maintain constant current. Note that this embodiment does not provide for the two-fold utility of the probe oscillations, but the potential speed of data collection still represents an improvement over the prior art.

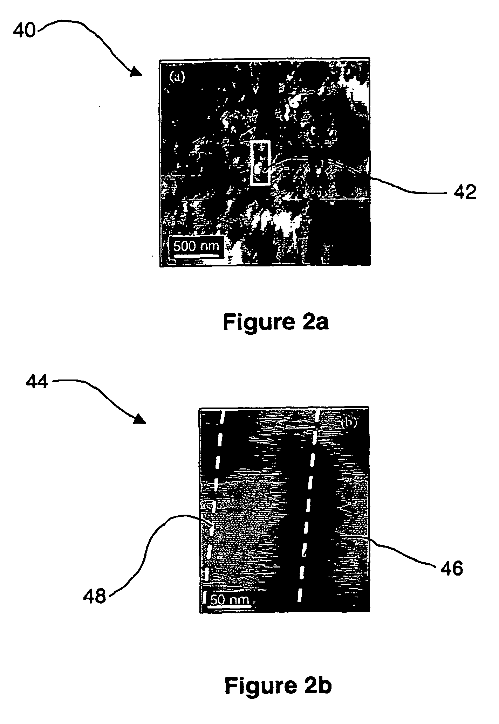

Figure 2a shows a conventionally scanned shear-force topographic image 40 of a polymer spherulite of polyhydroxybutyrate-co-valerate (PHB/V) taken using a prior art SNOM system. Figure 2b shows an image 44 taken using the high-speed PSTM of Figure 1, the signal processing being carried out using a LabView™ system. This image 44 is of a part of the same polymer spherulite sample, indicated by boxed region 42 in the image 40 of Figure 2a. The LabView™ system provides a convenient way in which to process extracted image information in a laboratory prototype environment. It is envisaged that more sophisticated data processing systems will be capable of producing improved images.

Each scan line in the image is collected in one period of oscillation of the probe 20. Thus the image 44 has a line 46 of mirror symmetry: one side being taken in a first trace and the other in a re-trace part of the oscillation. The digitisation is done in the time domain; that is, each pixel of the image is equally spaced in time from its neighbours. Since the speed of the probe varies during the swing, the image 44 is distorted with the sides and centre being somewhat "stretched". This distortion may be removed by applying the function:

$$x = Amplitude \times \sin\left(n \times \frac{\omega}{s}\right)$$

where $x$ is the position of the repositioned pixel in the scan line, *Amplitude* is the oscillation amplitude, $n$ is the pixel number, triggered from zero displacement of the probe, $s$ is the number of pixels sampled per second and $\omega$ is the angular velocity of the probe 20.

In taking this image 44, the resonant frequency of the probe was ~ 4 KHz and the oscillation amplitude ~ 150 nm. Thus the 4000 scan lines in the image 44 were collected in about 1 second. This is nearly 2000 times faster than the time taken to record the image 40 of Figure 2a. The resolution obtained in the high-speed image is about 30 nm. This is not a fundamental limit, but various factors contribute such as size of the probe, probe - sample separation, decay length of the field and equipment constraints. The equipment used in the prototype PSTM arrangement could readily be upgraded to improve resolution. For example, the bandwidth of the photodiode amplifier and the digitisation frequency of the particular LabView™ system available were significant contributing factors. It is envisaged that with currently-available equipment upgrades a resolution of the order of 1 nm will be readily achievable. This is comparable with the current level of resolution available using the slower, prior art PSTM imagers (1 - 3 nm).

If required, a number of images similar to but displaced from image 44 may be taken to reproduce the entire image area 40 shown in Figure 2a.

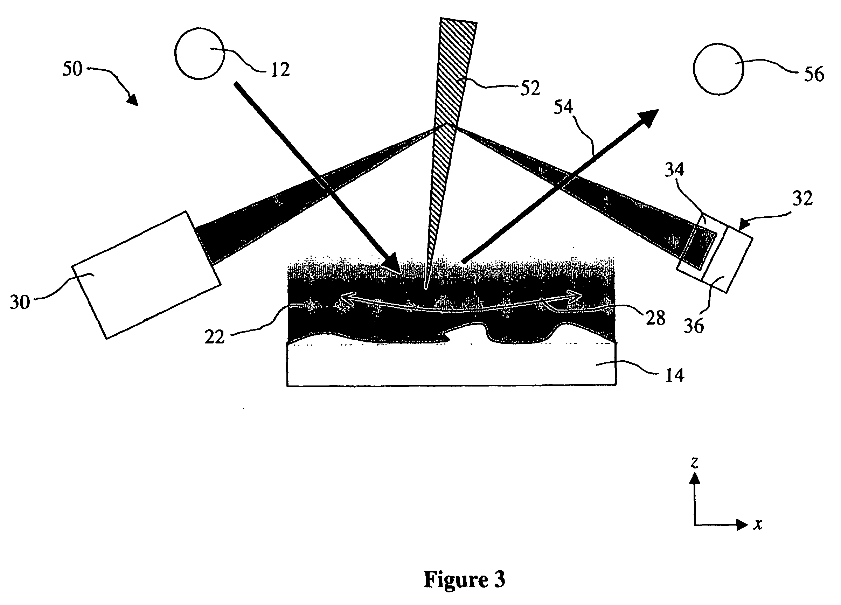

Figure 3 illustrates schematically an embodiment of the invention implemented in an apertureless scanning near-field optical microscope (apertureless SNOM mode), indicated generally by 50. Components providing the same function as those shown in Figure 1 are like-numbered. In Figure 3 light from the first laser source 12 illuminates the sample 14 directly. In the near-field region 22 around the sample 14 there will therefore be both evanescent and radiating fields. A tapered tungsten probe 52 is mounted on a scan tube (not shown) substantially normally to the sample surface. The scan tube enables the probe 52 to be moved both in the $y$ and $z$ directions i.e. into the page and towards the sample surface, using the same notation as for Figure 1. The probe 52 can also be oscillated in a lateral direction, as indicated by the arrows 28, by a piezoelectric transducer (not shown). Scattered light 54, containing information relating to the probe - field - sample interaction is collected by detector 56. As for the PSTM apparatus, probe oscillation is monitored by reflection of a focused light beam from the second laser 30 towards the first 36 and second 38 components of the off-axis split photodiode detector 34.

In operation, the principle of the apertureless SNOM is similar to that of the PSTM. When the sample is illuminated the probe 52 is brought into the near-field region 22 and oscillated in the xz plane close to resonance. Two scan lines are therefore obtained in one period of this oscillation and the scan tube controls motion in the y direction to complete the scan over the sample surface. At the same time, the probe oscillation amplitude is monitored by the second laser 30 and split photodetector 32 system. A processing circuit extracts the required amplitude information from the photodetector signal and in turn feeds this information back to the scan tube which also controls probe movement in the $z$ direction. The scan tube $z$ direction movement is made so as to maintain constant shear force and therefore constant oscillation amplitude. The main difference between this mode and PSTM is how the sample - field - probe interaction is excited and measured. In the arrangement of Figure 3, the absence of total internal reflection means that the sample is illuminated directly by a radiating field. This gives rise to both radiating and evanescent fields in the near-field region 22. As the probe 52 is brought into the near field both evanescent and radiating field - probe interactions are coupled to some degree into the radiating field, which is detected in the far field by detector 56. The detected signal is amplified and processed to form an image. The image formed in this way may be processed in substantially the same way as that obtained using the PSTM apparatus. The difference will be in its interpretation.

Each of the various SNOM modes have their particular advantages and disadvantages and it will depend on the desired application which one is selected. However any of the commonly-used local probes are robust to high oscillation rates and so this invention can be implemented in all SNOM types, as required.

The PSTM mode apparatus, relying on total internal reflection for illumination, has several advantages. Polarisation of the illuminating beam can be controlled and sample immersion in an evanescent field means that stray light is strongly limited. The PSTM technique is highly sensitive to the topography of the sample, which in turn leads to higher resolution.

The PSTM technique is the only SNOM arrangement which, to date, has been implemented using monitoring of the photon current to control the probe tip position. This obviates the need to create an interaction force (such as the shear force, which is fortunately a relatively weak force) between sample and probe which can be destructive of delicate polymer and biological specimens. The shear force method of distance control, as described in relation to the embodiments of Figures 1 and 3, operates through a confined fluid layer (water in standard conditions) between sample and probe. Interaction forces in this environment are extremely complex and they depend both on probe - sample separation and the material nature of the sample itself. This complicates image interpretation as material changes are indistinguishable from topological changes.

One limitation of PSTM is that images must be viewed in transmission: that is, samples must be transparent. Another is that the necessary oblique illumination introduces a strong anisotropy in the case of a sample with topography variations of several hundred nanometers. Furthermore, although advantageous in some respects, illumination with polarised light may not always be desirable and the PSTM technique is not amenable to unpolarised illumination.

The advantage of the apertureless SNOM mode is that the probe need not be an optical fibre. In fact it need not be transparent at all. Tungsten is a preferred material as tungsten fabrication is a mature technology and extremely small apices are achievable. Furthermore, a tungsten tip has a relatively high scattering cross section and the material itself has a high elastic modulus leading to a high probe resonant frequency. It is also clear that the probe can interrogate equally effectively either the transmitted or reflected field and so sample transparency is not an issue.

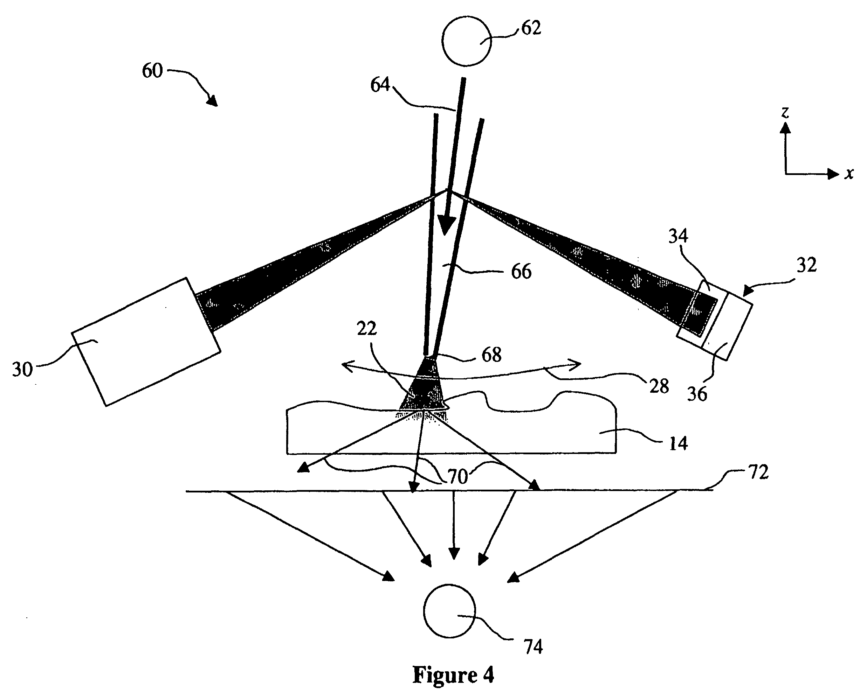

Figure 4 is a schematic illustration of the invention implemented in an apertured illumination SNOM mode. The apparatus 60 implementing this embodiment of the invention has a light source 62, radiation 64 from which is arranged to propagate down an optical fibre (not shown) to a probe 66 with sub-wavelength aperture 68. After interacting with the sample 14 scattered light 70 is collected in the far field by a lens 72 and focused onto a photodetector 74. Again either the probe 66 or sample is mounted on a scan tube which is capable of scanning in the $y$ (continuous scan) and $z$ (height adjustment) directions, and connected to a piezoelectric transducer which is capable of driving probe oscillations substantially in the $x$ direction, as indicated by the arrows 28. As in previous embodiments, the laser 30 and split photodetector 32 are arranged to monitor amplitude of the probe oscillations.

The process of carrying out the scan is as before: the probe 66 is oscillated near resonance, collecting two scan lines in each oscillation period, and translated relative to the sample in the near-field region above the sample surface 14. Height adjustment is controlled via feedback from the split detector signal and set to maintain sample surface - probe separation substantially constant.

In this embodiment 60 however, the sample is illuminated via the sub-wavelength aperture 68, which is scanned across its surface. Due to the sub-wavelength dimensions of the aperture 68, radiation cannot propagate from the fibre to the sample and the sample is illuminated only by an evanescent field. This field interacts with the sample and the effect of the sample is coupled into both evanescent and radiating fields. The radiating field is collected by the lens 72 and detector 74. Data processing and image formation are carried out after collection.

The detector 74 can be any one of a number of commonly-used optical detectors: for example, an avalanche photodiode, channel photomultiplier or standard photomultiplier tube. The probe 66 for use in apertured illumination mode is not so flexible as those used in apertureless and PSTM modes. It must be an optical fibre in order to be able to illuminate the sample and the aperture is formed by coating the fibre with an optically opaque substance. In this embodiment, the fibre is coated with aluminium. Aluminium is a preferred material as it has a small skin depth for optical-frequency electric fields and so a small aperture can be defined. Other metals may also be used however.

Images collected using apertured illumination SNOM are easier to analyse than those collected using other techniques. There are fewer problems with stray light and maintaining illumination at constant distance from the surface helps remove topographical artefacts. SNOM image analysis may be carried out using finite-difference time-domain computer simulation of Maxwell's equations, as described by S.H.Simpson and S. Hanna in Opt. Comms. **196**(1-6): 17 - 31 September 2001. Apertured illumination SNOM is also capable of imaging birefringence, which is of particular importance in studying crystallisation processes, and may prove useful for digital data storage.

On the other hand SNOMs using metallised fibres are more limited by noise than the other local probe microscopes. The laser damage threshold of the metal coating is a factor which limits the improvement which can be made to the signal to noise ratio simply by using a more powerful laser to illuminate the sample. Intensities above about 5 mW result in partial vaporisation of aluminium coating. Due to signal noise, resolution is expected to degrade significantly, in comparison to PSTM and other apertureless modes, below about 50 nm.

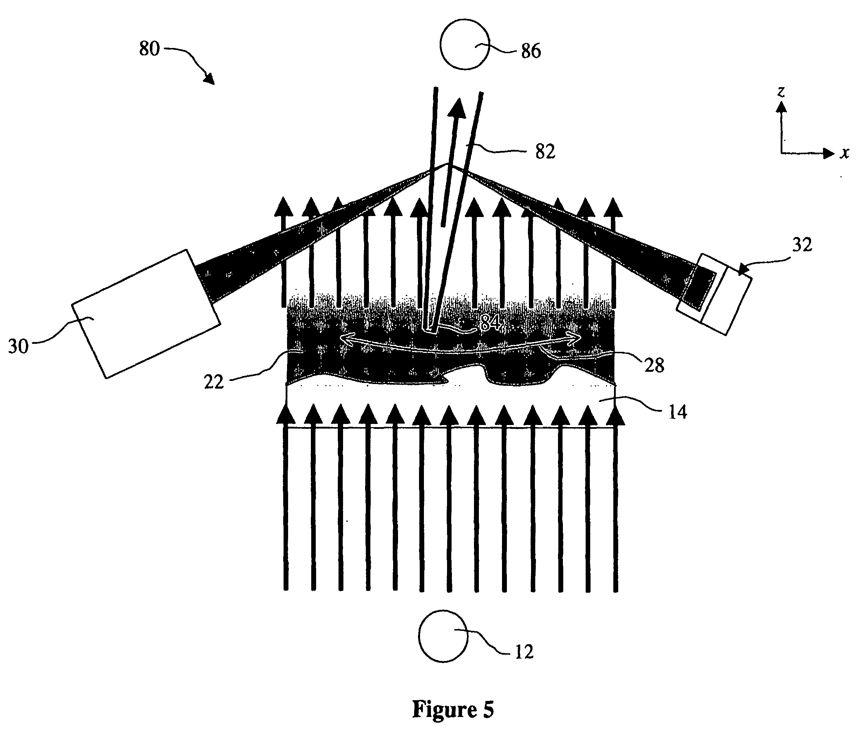

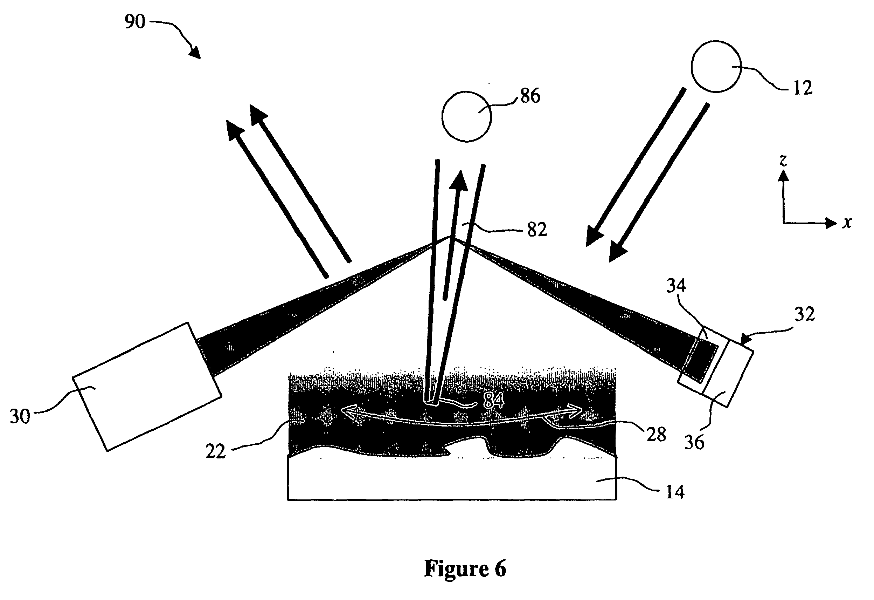

Figures 5 and 6 illustrate schematically apparatus 80, 90 embodying the invention in apertured collection SNOM modes. Light from the source 12 is incident on the sample 14 from the far field. Interaction with the sample 14 results in both evanescent and radiating fields in the near-filed region 22. This region is scanned by an apertured probe 82, the scanning being achieved and monitored in the same way as for previous embodiments of the invention. The apertured probe 82 in this embodiment is an aluminium-coated tapered optical fibre whose tip is left free of coating to form an aperture 84. This probe functions as a nanocollector: that is, its sub-wavelength tip interacts with the fields in the near-field region 22 around the sample, the interactions coupling into a radiating field which propagates along the fibre the other side of the aperture 84. This propagating field is detected by a detector 86 and the detector signal is processed to form an image. The difference between the two arrangements 80, 90 is that in Figure 5 the SNOM 80 is arranged to view the image in transmission and in Figure 6 in reflection. That is, the sources 86 are on differing sides of the sample, the Figure 6 arrangement 90 being suitable for imaging opaque materials.

Other possible arrangements of illumination and collection can also be used; the fundamental requirement is the probe - evanescent field - sample interaction. One envisaged example is to combine the benefits of PSTM with apertureless SNOM and collect the totally internally reflected light. In this arrangement the evanescent field interaction is subtracted from the collected light. The anticipated low signal to noise ratio presents a problem which will need to be overcome, however the ability to dispense with a fibre collector will allow the probe to be fabricated with a much sharper point and so improve resolution.

An important application for this fast scanning SNOM is to digital data reading. In one current process, high-density data is written using the heated tip of an atomic force microscope (AFM) probe to burn pits of around 10 nm in a storage medium. The data may be readout by carrying out a differential temperature scan of the surface. The pits however present topographic variations, ideal for readout using this invention implemented in one of the SNOM modes described herein. It is noted however that, because of their inherently higher resolution one of the apertureless modes may be preferred.

Currently, many different ways of achieving high-density data storage are being explored. Many, for example polymer reconformation and magnetic domain storage, are suitable for rapid readout by one of the modes of SNOM described herein.

Other applications of this invention include the detection and measurement of guided waves, polaritons, microcavity modes and other confined electromagnetic fields as well as in local surface spectroscopy.

## Claims

1. A scanning near-field optical microscope comprising

   a probe (20) which is moveable into a near-field region (22) surrounding a surface of an illuminated sample (14);
   driving means arranged to provide relative motion between the probe (20) and the sample surface;
   means for oscillating the probe (20) across the surface; and
   a detector (24) arranged to detect electromagnetic radiation affected by an interaction between probe (20), field and sample (14) in the near-field region (22);
   **characterised in that**, the microscope is arranged, in operation, to carry out a scan of the sample surface wherein scan area is covered by an arrangement of scan lines, each scan line being collected by oscillating the probe (20) at or near its resonant frequency such that oscillation amplitude determines scan line length and their arrangement is provided by operation of the driving means.

2. A microscope according to Claim 1 **characterised in that** the relative motion between probe (20) and sample surface is provided at an adjustable separation distance, this distance during the scan being controlled by height-adjustment means arranged to monitor a parameter characteristic of probe - surface distance and to adjust either probe or sample height in order to maintain a substantially constant value of that parameter.

3. A microscope according to Claim 2 **characterised in that** the driving means is also arranged to provide height adjustment.

4. A microscope according to claim 3 **characterised in that** the driving means is arranged to move the probe (20).

5. A microscope according to claim 3 **characterised in that** the driving means is arranged to move the sample (14).

6. A microscope according to any one of claims 2 to 5 **characterised in that** the distance between the probe (20) and the sample surface is controlled by feedback from the value of the monitored parameter.

7. A microscope according to Claim 6 **characterised in that** the parameter characteristic of probe - surface distance is oscillation amplitude and data relating to this parameter is gathered contemporaneously with scan line image collection.

8. A microscope according to Claim 7 **characterised in that** the means for oscillating the probe (20) across the sample 14 surface is arranged, during scan line collection, to oscillate the probe (20) just off its resonant frequency.

9. A microscope according to Claim 7 or 8 **characterised in that** the microscope also includes a laser source (30), split photodetector (32) and split detector signal processing means arranged such that light from the laser is incident on and reflected from the probe (20), when oscillating, towards the split detector (32) and whereby the processing means is arranged to generate a value for probe oscillation amplitude based on a ratio of signals received at parts (34, 36) of the split detector (32).

10. A microscope according to Claim 7 **characterised**

**in that** the probe (20) is attached to a prong of a tuning fork and probe oscillation amplitude is measured by means of a piezoresistive coating on the prongs.

11. A microscope according to any one of claims 2 to 6 **characterised in that** the electromagnetic field is a substantially evanescent field and the parameter characteristic of probe - surface distance is photon current.

12. A microscope according to any preceding claim **characterised in that** the driving means is arranged to provide a relative linear translation of probe (20) and sample (14) in a direction substantially orthogonal to a plane in which the probe is oscillated, thereby defining a substantially rectangular scan area.

13. A microscope according to any one of claims 1 to 11 **characterised in that** the driving means is arranged to provide a relative rotation of probe (20) and sample (14) about an axis substantially coincident with that about which the probe (20) is oscillated, thereby covering the scan area by a circular arrangement of scan lines.

14. A microscope according to Claim 7 or 8 **characterised in that** the feedback has a time constant greater than one cycle of probe oscillation and significantly less than time taken in performing a scan.

15. A microscope according to any preceding claim **characterised in that** it is associated with a light source (12) for illuminating the sample (14).

16. A microscope according to Claim 15 **characterised in that** the electromagnetic field is a substantially evanescent field.

17. A microscope according to Claim 16 **characterised in that** the sample (14) is mounted on a prism and the prism and light source (12) are mutually arranged such that, in operation, light from the source is totally internally reflected inside the prism at a region adjacent the sample and thereby illuminates the sample (14) in the evanescent field; the probe is a tapered optical fibre (18) with sub-wavelength tip (20) such that, on interaction of the tip with the evanescent field around the sample, radiating waves are generated in the fibre, remote from the tip (20); the detector (24) is arranged to detect radiating waves propagating in the fibre; and the microscope also includes image signal processing means arranged to extract and display an image of the sample from a signal received at the detector (24).

18. A microscope according to Claim 16 **characterised in that** the probe (66) is an apertured optical fibre (66) arranged such that light from the source (62) can propagate along the fibre (66) and couple with a sub-wavelength aperture (68) at the fibre tip to illuminate the sample (14) in the evanescent field; and **in that** the microscope (60) also includes collecting optics (72) arranged to collect radiation scattered from the sample (14) and focus it on the detector (74); and image signal processing means arranged to extract and display an image of the sample from a signal received at the detector (74).

19. A microscope according to any one of claims 1 to 15 **characterised in that** the probe (82) is a tapered optical fibre with sub-wavelength aperture (84) at its tip such that, on moving the probe (82) into the near-field region (22) of an illuminated sample (14), probe - field coupling gives rise to propagating waves within the fibre remote from the aperture (84) and the fibre output is connected to the detector (86).

20. A microscope according to Claim 18 or 19 **characterised in that** the probe is a tapered optical fibre coated, except for its tip, with aluminium, the tip thereby forming the aperture (68, 84).

21. A microscope according to any one of claims 1 to 15 **characterised in that** the probe (52) is metallic and tapered to a sharp point and the source (12) and detector (56) are both in a far-field region arranged such that, in operation, radiation propagates from the source (12) to the sample (14), to establish a field in the near-field region into which the probe (52) is introduced, and then to the detector (56), whereby interactions between probe (52), field and sample (14) are detected in radiating waves emanating from the near field region (22).

22. A digital data readout system comprising a microscope according to any preceding claim adapted to scan a data storage medium onto which data is written as a change in optical properties of the storage medium.

23. A data readout system according to claim 22 **characterised in that** data is written as burnt nanometric pits.

24. Use of a local probe (20) in an optical near-field scanning microscope according to any one of claims 1 to 21.

25. A method of rapidly collecting image data from a scan area of a sample (14) with nanometric features wherein the method comprises the steps of:-

(a) illuminating a sample (14) with an electromagnetic field;

(b) moving a probe (20) with tip of sub-wavelength dimensions into a near-field region (22) in the proximity of the sample (14);

(c) oscillating the probe (20) across a surface of the sample at or near its resonant frequency whilst providing a relative motion between the probe (20) and said surface of the sample such that an arrangement of scan lines, the length of which correspond to the oscillation amplitude, covers the scan area;

(d) detecting radiation which is coupled into the near-field region (22), and which therefore contains informatign relating to interactions between the probe (20), field and sample (14), with a detector (24); and

(e) processing signals from said detector (24) in order to extract information relating to the nanometric structure of the sample.

**Patentansprüche**

1. Optisches Nahfeldrastermikroskop, umfassend eine Sonde (20), die in einen Nahfeldbereich (22) bewegbar ist, der eine Oberfläche einer beleuchteten Probe (14) umgibt;
eine Antriebseinrichtung, die angeordnet ist, um für eine Relativbewegung zwischen der Sonde (20) und der Probenoberfläche zu sorgen;
eine Einrichtung zum Hin- und Herbewegen der Sonde (20) über die Oberfläche; und
einen Detektor (24), der angeordnet ist, um elektromagnetische Strahlung zu erfassen, die durch eine Wechselwirkung zwischen Sonde (20), Feld und Probe (14) im Nahfeldbereich (22) beeinflusst wird; **dadurch gekennzeichnet, dass** das Mikroskop, im Betrieb, angeordnet ist, um eine Abtastung der Probenoberfläche auszuführen, bei der die Abtastfläche durch eine Anordnung von Abtastzeilen abgedeckt wird, wobei jede Abtastzeile aufgenommen wird, indem die Sonde (20) bei oder nahe ihrer Resonanzfrequenz hin und her bewegt wird, so dass die Schwingungsamplitude die Abtastzeilenlänge bestimmt und deren Anordnung durch Betätigung der Antriebseinrichtung bereitgestellt wird.

2. Mikroskop nach Anspruch 1, **dadurch gekennzeichnet, dass** die Relativbewegung zwischen Sonde (20) und Probenoberfläche in einem einstellbaren Trennabstand vorgesehen ist, wobei dieser Abstand während der Abtastung von einer Höheneinstelleinrichtung gesteuert wird, die angeordnet ist, um einen für den Sonden-Oberflächen-Abstand kennzeichnenden Parameter zu überwachen und entweder Sonden- oder Probenhöhe zu verstellen, um einen im wesentlichen konstanten Wert dieses Parameters aufrecht zu erhalten.

3. Mikroskop nach Anspruch 2, **dadurch gekennzeichnet, dass** die Antriebseinrichtung auch angeordnet ist, um für die Höheneinstellung zu sorgen.

4. Mikroskop nach Anspruch 3, **dadurch gekennzeichnet, dass** die Antriebseinrichtung angeordnet ist, um die Sonde (20) zu bewegen.

5. Mikroskop nach Anspruch 3, **dadurch gekennzeichnet, dass** die Antriebseinrichtung angeordnet ist, um die Probe (14) zu bewegen.

6. Mikroskop nach einem der Ansprüche 2 bis 5, **dadurch gekennzeichnet, dass** der Abstand zwischen der Sonde (20) und der Probenoberfläche durch Rückkopplung aus dem Wert des überwachten Parameters gesteuert wird.

7. Mikroskop nach Anspruch 6, **dadurch gekennzeichnet, dass** der für den Sonden-Oberflächen-Abstand kennzeichnende Parameter die Schwingungsamplitude ist, und diesen Parameter betreffende Daten gleichzeitig mit der Abtastzeilenbilderfassung gesammelt werden.

8. Mikroskop nach Anspruch 7, **dadurch gekennzeichnet, dass** die Einrichtung zum Hin- und Herbewegen der Sonde (20) über die Oberfläche der Probe (14) angeordnet ist, um während der Abtastzeilenerfassung die Sonde (20) knapp außerhalb ihrer Resonanzfrequenz in schwingung zu versetzen.

9. Mikroskop nach Anspruch 7 oder 8, **dadurch gekennzeichnet, dass** das Mikroskop auch eine Laserquelle (30), einen geteilten Fotodetektor und eine geteilte Detektorsignalverarbeitungseinrichtung einschließt, die so angeordnet sind, dass Licht aus dem Laser auf die Sonde (20) einfällt und von dieser, wenn sie sich hin und her bewegt, in Richtung des geteilten Detektors (32) reflektiert wird, und wobei die Verarbeitungseinrichtung angeordnet ist, um basierend auf einem Verhältnis von Signalen, die an Teilen (34, 36) des geteilten Detektors (32) empfangen werden, einen Wert für die Sondenschwingungsamplitude zu erzeugen.

10. Mikroskop nach Anspruch 7, **dadurch gekennzeichnet, dass** die Sonde (20) an einer Zinke einer Stimmgabel befestigt ist, und die Sondenschwingungsamplitude mittels einer piezoresistiven Beschichtung auf den Zinken gemessen wird.

**11.** Mikroskop nach einem der Ansprüche 2 bis 6, **dadurch gekennzeichnet, dass** das elektromagnetische Feld ein im Wesentlichen evaneszentes Feld ist und die Parametereigenschaft des Sonden-Oberflächen-Abstands ein Photonenstrom ist.

**12.** Mikroskop nach einem vorangehenden Anspruch, **dadurch gekennzeichnet, dass** die Antriebseinrichtung angeordnet ist, um für eine relative lineare Translationsbewegung von Sonde (20) und Probe (14) in einer Richtung zu sorgen, die im Wesentlichen orthogonal zu einer Ebene ist, in der die Sonde hin und her bewegt wird, wodurch eine im wesentlichen rechteckige Abtastfläche festgelegt wird.

**13.** Mikroskop nach einem der Ansprüche 1 bis 11, **dadurch gekennzeichnet, dass** die Antriebseinrichtung angeordnet ist, um für eine relative Drehung von Sonde (20) und Probe (14) um eine Achse zu sorgen, die im Wesentlichen mit derjenigen zusammenfällt, um welche die Sonde (20) hin und her bewegt wird, wodurch die Abtastfläche durch eine kreisförmige Anordnung von Abtastzeilen abgedeckt wird.

**14.** Mikroskop nach Anspruch 7 oder 8, **dadurch gekennzeichnet, dass** die Rückkopplung eine Zeitkonstante besitzt, die größer ist als ein Zyklus der Sondenschwingung und bedeutend kleiner als die Zeit, die zur Durchführung einer Abtastung benötigt wird.

**15.** Mikroskop nach einem vorangehenden Anspruch, **dadurch gekennzeichnet, dass** es mit einer Lichtquelle (12) zum Beleuchten der Probe (14) verbunden ist.

**16.** Mikroskop nach Anspruch 15, **dadurch gekennzeichnet, dass** das elektromagnetische Feld ein im Wesentlichen evaneszentes Feld ist.

**17.** Mikroskop nach Anspruch 16, **dadurch gekennzeichnet, dass** die Probe (14) auf einem Prisma montiert ist, und das Prisma und die Lichtquelle (12) gegenseitig so angeordnet sind, dass im Betrieb Licht aus der Quelle im Inneren des Prismas in einem zur Probe benachbarten Bereich innenseitig totalreflektiert wird und dadurch die Probe (14) im evaneszenten Feld beleuchtet;
die Sonde eine verjüngte Optikfaser (18) mit einer Subwellenlängenspitze (20) ist, so dass bei Wechselwirkung der spitze mit dem evaneszenten Feld um die Sonde herum entfernt von der Spitze (20) Strahlungswellen in der Faser erzeugt werden;
der Detektor (24) angeordnet ist, um sich in der Faser ausbreitende strahlungswellen zu erfassen; und
das Mikroskop auch eine Bildsignalverarbeitungseinrichtung einschließt, die angeordnet ist, um aus einem am Detektor (28) empfangenen Signal ein Bild der Probe zu gewinnen und anzuzeigen.

**18.** Mikroskop nach Anspruch 16, **dadurch gekennzeichnet, dass** die Sonde (66) eine mit einer Öffnung versehene optikfaser (66) ist, die so angeordnet ist, dass sich Licht aus der Quelle (62) entlang der Faser (66) ausbreiten und mit einer Subwellenlängenöffnung (68) an der Faserspitze koppeln kann, um die Probe (14) im evaneszenten Feld zu beleuchten; und dass
das Mikroskop (60) auch eine Erfassungsoptik (72) einschließt, die angeordnet ist, um aus der Probe (14) gestreute Strahlung zu erfassen und sie auf dem Detektor (74) zu fokussieren; und
die Bildsignalverarbeitungseinrichtung angeordnet ist, um aus einem am Detektor (74) empfangenen Signal ein Bild der Probe zu gewinnen und anzuzeigen.

**19.** Mikroskop nach einem der Ansprüche 1 bis 15, **dadurch gekennzeichnet, dass** die Sonde (82) eine verjüngte Optikfaser mit einer Subwellenlängenöffnung (84) an ihrer Spitze ist, so dass beim Bewegen der Sonde (82) in den Nahfeldbereich (22) einer beleuchteten Probe (14) die Sonden-Feld-Kopplung sich ausbreitende Wellen innerhalb der Faser entfernt von der Öffnung (84) verursacht und der Faserausgang mit den Detektor (86) verbunden ist.

**20.** Mikroskop nach Anspruch 18 oder 19, **dadurch gekennzeichnet, dass** die Sonde eine verjüngte optikfaser ist, die abgesehen von ihrer spitze mit Aluminium beschichtet ist, wobei die Spitze dadurch die öffnung (68, 84) bildet.

**21.** Mikroskop nach einem der Ansprüche 1 bis 15, **dadurch gekennzeichnet, dass** die Sonde (52) metallisch und zu einer scharfen Spitze verjüngt ist, und die Quelle (12) und der Detektor (56) beide in einem Fernfeldbereich angeordnet sind, so dass sich im Betrieb Strahlung aus der Quelle (12) zur Probe (14) ausbreitet, um ein Feld im Nahfeldbereich zu bilden, in das die Sonde (52) eingeführt wird, und dann zum Detektor (56), wodurch Wechselwirkungen zwischen Sonde (52), Feld und Probe (14) in strahlungswellen erfasst werden, die aus den Nahfeldbereich (22) ausgehen.

**22.** Digitales Datenauslesesystem, umfassend ein Mikroskop nach einem vorangehenden Anspruch, das angepasst ist, um ein Datenspeichermedium abzutasten, auf dem Daten als Veränderung optischer Eigenschaften des Speichermediums geschrieben sind.

**23.** Datenauslesesystem nach Anspruch 22, **dadurch**

**gekennzeichnet, dass** die Daten als eingebrannte Nanometergrübchen geschrieben sind.

24. Verwendung einer lokalen Sonde (20) in einem optischen Nahfeldrastermikroskop nach einem der Ansprüche 1 bis 21.

25. Verfahren zur schnellen Erfassung von Bilddaten aus einer Abtastfläche einer Probe (14) mit Nanometermerkmalen, wobei das Verfahren die Schritte umfasst:

(a) Beleuchten einer Probe (14) mit einem elektromagnetischen Feld;
(b) Bewegen einer Sonde (20) mit einer Spitze von subwellenlängenabmessungen in einen Nahfeldbereich (22) in der Nähe der Probe (14);
(c) Hin- und Herbewegen der Sonde (20) über eine Oberfläche der Probe bei oder nahe ihrer Resonanzfrequenz, während für eine Relativbewegung zwischen der Sonde (20) und der Oberfläche der Probe gesorgt wird, so dass eine Anordnung von Abtastzeilen, deren Länge der schwingungsamplitude entspricht, die Abtastfläche abdeckt;
(d) Erfassen von Strahlung, die in den Nahfeldbereich (22) eingekoppelt wird, und die daher Informationen betreffend Wechselwirkungen zwischen der Sonde (20), dem Feld und der Probe (14) enthält, mit einem Detektor (24); und
(e) Verarbeiten von Signalen aus dem Detektor (24), um Informationen betreffend die Nanometerstruktur der Probe zu gewinnen.

**Revendications**

1. Microscope optique à champ proche à balayage comprenant

une sonde (20) apte à être mobile dans une région deà champ proche (22) entourant une surface d'un échantillon illuminé (14) ;

des moyens d'entraînement agencés pour fournir un mouvement relatif entre la sonde (20) et la surface de l'échantillon ;

des moyens pour faire osciller la sonde (20) à travers la surface ; et

un détecteur (24) agencé pour détecter un rayonnement électromagnétique affecté par une interaction entre la sonde (20), le champ et l'échantillon (14) dans la région à champ proche (22) ;

**caractérisé en ce que** le microscope est agencé, en fonctionnement, pour effectuer un balayage de la surface d'échantillon dans lequel l'aire de balayage est couverte par un agencement de lignes de balayage, chaque ligne de balayage étant collectée en faisant osciller la sonde (20) à ou proche de sa fréquence de résonance de telle sorte que l'amplitude d'oscillation détermine à la fois la longueur de ligne de balayage entière et une indication de hauteur, leur agencement étant assuré par le fonctionnement des moyens d'entraînement.

2. Microscope selon la revendication 1, **caractérisé en ce que** le mouvement relatif entre la sonde (20) et la surface de l'échantillon est fourni à une distance de séparation ajustable, cette distance pendant le balayage étant régulée par des moyens d'ajustement de hauteur agencés pour surveiller une caractéristique de paramètre de la distance sonde-surface et pour ajuster soit la sonde, soit la hauteur de l'échantillon afin de maintenir une valeur sensiblement constante de ce paramètre.

3. Microscope selon la revendication 2, **caractérisé en ce que** les moyens d'entraînement sont également agencés pour fournir un ajustement de hauteur.

4. Microscope selon la revendication 3, **caractérisé en ce que** les moyens d'entraînement sont agencés pour déplacer la sonde (20).

5. Microscope selon la revendication 3, **caractérisé en ce que** les moyens d'entraînement sont agencés pour déplacer l'échantillon (14).

6. Microscope selon l'une quelconque des revendications 2 à 5, **caractérisé en ce que** la distance entre la sonde (20) et la surface de l'échantillon est contrôlée par rétroaction à partir de la valeur du paramètre surveillé.

7. Microscope selon la revendication 6, **caractérisé en ce que** la caractéristique de paramètre de la distance sonde-surface est l'amplitude d'oscillation et les données liées à ce paramètre sont réunies simultanément avec la collecte d'images de ligne de balayage.

8. Microscope selon la revendication 7, **caractérisé en ce que** les moyens pour faire osciller la sonde (20) à travers la surface de l'échantillon (14) sont agencés, pendant la collecte de ligne de balayage, pour faire osciller la sonde (20) juste en dehors de sa fréquence de résonance.

9. Microscope selon la revendication 7 ou 8, **caractérisé en ce que** le microscope comprend également une source laser (30), un photodétecteur de division (32) et des moyens de traitement de signal de détecteur de division agencés de telle sorte que la lumière provenant du laser est incidente sur et réfléchie sur de la sonde (20), lorsqu'elle oscille, pour se diriger ensuite sur le détecteur de division (32), les moyens de traitement sont agencés pour générer une valeur pour l'amplitude d'oscillation de sonde basée sur un rapport des signaux reçus par les parties (34, 36) du détecteur de division (32).

10. Microscope selon la revendication 7, **caractérisé en ce que** la sonde (20) est attachée à une patte d'un diapason et l'amplitude d'oscillation de sonde est mesurée au moyen d'un revêtement piézorésistif sur la patte.

11. Microscope selon l'une quelconque des revendications 2 à 6, **caractérisé en ce que** le champ électromagnétique est un champ sensiblement évanescent et que la caractéristique de paramètre de la distance sonde-surface est un photocourant.

12. Microscope selon l'une quelconque des revendications précédentes, **caractérisé en ce que** les moyens d'entraînement sont agencés pour fournir une translation linéaire relative de la sonde (20) et de l'échantillon (14) dans une direction sensiblement orthogonale à un plan dans lequel la sonde est mise en oscillation, définissant ainsi une aire de balayage sensiblement rectangulaire.

13. Microscope selon l'une quelconque des revendications 1 à 11, **caractérisé en ce que** les moyens d'entraînement sont agencés pour fournir une rotation relative de la sonde (20) et de l'échantillon (14) autour d'un axe sensiblement coïncidant avec celui autour duquel la sonde (20) oscille, couvrant ainsi l'aire de balayage par un agencement circulaire des lignes de balayage.

14. Microscope selon la revendication 7 ou 8, **caractérisé en ce que** la rétroaction a une constante de temps plus grande qu'un cycle d'oscillation de la sonde et significativement inférieure au temps pris pour la réalisation d'un balayage.

15. Microscope selon l'une quelconque des revendications précédentes, **caractérisé en ce qu'**il est associé à une source de lumière (12) destinée à illuminer l'échantillon (14).

16. Microscope selon la revendication 15, **caractérisé en ce que** le champ électromagnétique est un champ sensiblement évanescent.

17. Microscope selon la revendication 16, **caractérisé en ce que** l'échantillon (14) est monté sur un prisme et le prisme et la source de lumière (12) sont mutuellement agencés de telle sorte, qu'en fonctionnement, la lumière provenant de la source est réfléchie de manière totalement interne à l'intérieur du prisme au niveau d'une région adjacente à l'échantillon et illumine ainsi l'échantillon (14) dans le champ évanescent ;

la sonde est une fibre optique effilée (18) avec un embout de sous-longueur d'onde (20) telle que, lors de l'interaction de l'embout avec le champ évanescent entourant l'échantillon, les ondes de rayonnement pénètrent dans la fibre, éloignée de l'embout (20) ;

le détecteur (24) est agencé pour détecter des ondes de rayonnement se propageant dans la fibre ; et

le microscope comprend également des moyens de traitement de signal d'image agencés pour extraire et afficher une image de l'échantillon provenant d'un signal reçu au niveau d'un détecteur (24).

18. Microscope selon la revendication 16, **caractérisé en ce que** la sonde (66) est une fibre optique à ouverture (66) agencée de telle sorte que la lumière provenant de la source (62) peut se propager le long de la fibre (66) et se coupler avec une ouverture de sous-longueur d'onde (68) au niveau de l'embout de la fibre pour illuminer l'échantillon (14) dans le champ évanescent ; et **en ce que**

le microscope (60) comprend également une optique de collecte (72) agencée pour collecter le rayonnement diffusé à partir de l'échantillon (14) et le focaliser sur le détecteur (74) ; et les moyens de traitement de signal d'image agencés pour extraire et afficher une image de l'échantillon provenant d'un signal reçu au niveau du détecteur (74).

19. Microscope selon l'une quelconque des revendications 1 à 15, **caractérisé en ce que** la sonde (82) est une fibre optique effilée avec une ouverture de sous-longueur d'onde (84) au niveau de son embout de telle sorte que, lors du déplacement de la sonde (82) dans la région de champ proche (22) d'un échantillon illuminé (14), le couplage sonde-champ donne lieu à des ondes de propagation au sein de la fibre éloignée de l'ouverture (84) et la sortie de fibre est connectée au détecteur (86).

20. Microscope selon la revendication 18 ou 19, **caractérisé en ce que** la sonde est une fibre optique effilée revêtue, excepté pour son embout, d'aluminium, l'embout formant ainsi l'ouverture (68, 84).

21. Microscope selon l'une quelconque des revendication 1 à 15, **caractérisé en ce que** la sonde (52) est métallique et effilée vers une pointe aiguë et la source (12) et le détecteur (56) sont tous deux dans une région de champ proche agencés de telle sorte que, en fonctionnement, un rayonnement se propage de la sonde (12) à l'échantillon (14), pour établir un champ dans la région de champ proche dans laquelle la sonde (52) est introduite, puis vers le détecteur (56), moyennant quoi les interactions entre la sonde (52), le champ et l'échantillon (14) sont détectées dans des ondes de rayonnement émanant de la région de champ proche (22).

22. Système de lecture de données numériques comprenant un microscope selon l'une quelconque des revendications précédentes adapté pour balayer un support de stockage de données sur lequel des données sont écrites en tant que changement de propriétés optiques sur le support de stockage.

23. Système de lecture de données selon la revendication 22, **caractérisé en ce que** les données sont écrites sous forme de piqûres nanométriques brûlées.

24. Utilisation d'une sonde locale (20) dans un microscope optique à balayage de champ proche selon l'une quelconque des revendications 1 à 21.

25. Méthode de collecte rapide de données d'image provenant d'une aire de balayage d'échantillon (14) avec des particularités nanométriques, dans laquelle la méthode comprend les étapes consistant à :

> (a) illuminer un échantillon (14) avec un champ électromagnétique ;
> (b) déplacer une sonde (20) avec un embout de dimensions de sous-longueur d'onde dans une région de champ proche (22) à proximité de l'échantillon (14) ;
> (c) faire osciller la sonde (20) à travers une surface de l'échantillon à ou proche de sa fréquence de résonance tout en fournissant un mouvement relatif entre la sonde (20) et ladite surface de l'échantillon de sorte qu'un agencement de lignes de balayage dont la longueur correspond à l'amplitude d'oscillation, couvre l'aire de balayage ;
> (d) détecter un rayonnement qui est couplé dans la région à champ proche (22), et qui contient donc des informations liées aux interactions entre la sonde (20), le champ et l'échantillon (14), et avec le détecteur (24) ; et
> (e) traiter les signaux provenant dudit détecteur (24) afin d'extraire des informations liées à la structure nanométrique de l'échantillon.

Figure 1

EP 1 360 538 B1

40

42

**Figure 2a**

44

46

48

**Figure 2b**

**Figure 3**

EP 1 360 538 B1

**Figure 4**

EP 1 360 538 B1

**Figure 5**

EP 1 360 538 B1

**Figure 6**